# EUROPÄISCHE PATENTSCHRIFT

(11) **EP 0 657 347 B1**
(45) Veröffentlichungstag und Bekanntmachung des Hinweises auf die Patenterteilung: **18.09.1996**
(21) Anmeldenummer: 94110943.1
(22) Anmeldetag: 14.07.1994
(51) Int. Cl.: B62M 11/18

(54) **Mehrgangnabe für Fahrräder**
Multispeed bicycle
Bicyclette à plusieurs vitesses

(30) Priorität: 11.12.1993 DE 4342347
(43) Veröffentlichungstag der Anmeldung: 14.06.1995
(73) Patentinhaber: FICHTEL & SACHS AG, D-97424 Schweinfurt (DE)
(72) Erfinder: Meier-Burkamp, Gerhard, Dipl.-Ing., D-97493 Bergrheinfeld (DE)

(56) Entgegenhaltungen:
- DE-A- 4 142 867

## Beschreibung

Die Erfindung betrifft eine Mehrgangnabe für Fahrräder gemäß dem Oberbegriff des Anspruchs 1.

Eine Nabe mit der Möglichkeit, eine Vielzahl von Gangstufen durch zwei nebeneinanderliegende Planetenradsätze zu erzeugen, ist mit der DE 41 42 867 bekannt geworden, wo ein Hohlrad eines ersten Planetenradsatzes über einer in eine Drehrichtung wirkende Kupplungseinrichtung mit einer Nabenhülse in Wirkverbindung steht. Das in einem zweiten Planetenradsatz gewonnene Übersetzungsverhältnis wird über einen abtreibenden zweiten Planetenradträger dem ersten Planetenradträger zugeführt und mit dem Übersetzungsverhältnis des ersten Planetenradsatzes überlagert. Die Anordnung des ersten und des zweiten Planetenradsatzes ist vorwiegend als Getriebe mit Vorgelege zu betrachten, wo hingegen bei der vorliegenden vorgeschlagenen Mehrgangnabe der erste und der zweite Planetenradsatz als gleichwertig in Bezug auf die Erzeugung von übersetzungsbildenden Drehzahlen für je zwei Drehzahleingänge eines dritten Planetenradsatzes zu betrachten sind. Dieser dritte Planetenradsatz arbeitet sozusagen als Differenzialgetriebe, was besagen will, daß dieser dritte Planetenradsatz die Drehzahl des ersten Hohlrades des ersten Planetenradsatzes und die Drehzahl des zweiten Hohlrades des zweiten Planetenradsatzes über sein drittes Hohlrad derart an die Nabenhülse weitergibt, daß entweder das Sonnenrad des dritten Planetenradsatzes schneller als ein dritter Planetenradträger, der mit dem ersten Hohlrad drehfest gekuppelt ist, dreht oder umgekehrt. Eine derart aufgebaute Mehrgangnabe beinhaltet eine Vielzahl von Gangstufen, die durch den als Differenzialgetriebe wirkenden dritten Planetenradsatz in beliebiger Spreizung je nach Anwendung der Nabe an die Nabenhülse weitergegeben werden. Von besonderem Vorteil erweisen sich hier Kupplungseinrichtunger, die in einer Drehzahl wirken und je einem Planetenradsatz beigeordnet sind. In der erfinderischen Ausführung verbindet somit eine erste Kupplungseinrichtung den ersten gemeinsamen Planetenradträger mit dem ersten Hohlrad und eine zweite Kupplungseinrichtung den ersten Planetenradträger mit dem zweiten Hohlrad. Im Falle einer speziellen Schaltung kann mit Hilfe wenigstens einer dieser beiden Kupplungseinrichtungen ein direkter Gang erzeugt werden; von größerem Interesse jedoch ist hier die Möglichkeit, mit jeder dieser beiden Kupplungseinrichtungen jedem Planetenradsatz eine zusätzliche Gangstufe beizuordnen.

Es ist daher die Aufgabe der Erfindung, eine Nabe zu schaffen, die eine Vielzahl von Gangstufen mit geringem Aufwand und ausreichender Gangspreizung für jede Anwendung von Nabengetrieben im Fahrrad erzeugt.

Die Lösung ist im kennzeichnenden Teil der Ansprüche 1 und 10 beschrieben. Ausgestaltungen sind den Unteransprüchen zu entnehmen.

Die Erfindung wird nachstehend anhand zweier mit Prinzipskizzen veranschaulichter Ausführungsbeispiele eines Nabenschaltgetriebes einer Mehrgangnabe erläutert. Es zeigen:
- Fig. 1: ein Nabenschaltgetriebe mit einem ersten, zweiten und dritten Planetenradsatz innerhalb einer Nabenhülse in schematischer Darstellung
- Fig. 2: eine Variante des Nabenschaltgetriebes gemäß Fig. 1 mit einer von dort verschiedenen Anordnung des dritten Planetenradsatzes

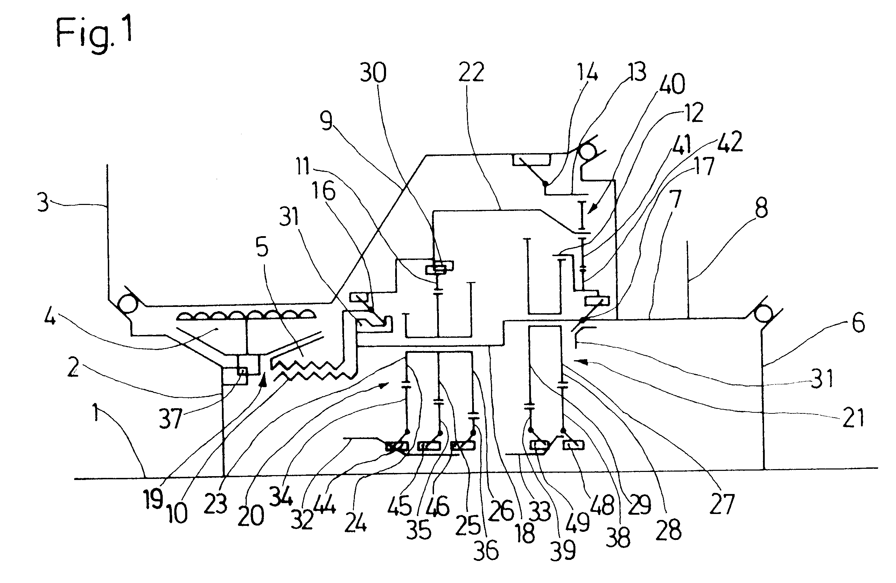

Gemäß Fig. 1 wird ein Nabenschaltgetriebe für eine Mehrgangnabe für die Verwendung im Hinterrad eines Fahrrades beschrieben. Mit 1 wird eine Nabenachse bezeichnet, über die das Nabenschaltgetriebe mit dem Fahrradrahmen verbunden ist. Ein Hebelkonus 2 ist drehfest und axial nicht verschiebbar auf der Nabenachse 1 angeordnet, wobei ein Hebel 3 diese Drehfestigkeit noch durch eine Abstützung am Fahrradrahmen sicherstellt. Auf der dem Hebelkonus 2 gegenüberliegenden Seite des Nabenschaltgetriebes ist ein Festkonus 6 starr angeordnet, der über ein erstes Lager die Lagerbasis für einen Antreiber 7 bildet, auf welchem ein Antriebsritzel 8 drehfest angeordnet ist. Ein zweites Lager am größten Durchmesser dieses Antreibers 7 verbindet den Antreiber 7 mit einer Nabenhülse 9, die sich über ein drittes Lager am Hebelkonus 2 abstützt. Der Antreiber 7 ist drehfest mit einem ersten Planetenradträger 18 verbunden, auf dem ein erstes mehrstufiges Planetenrad 23 und ein zweites mehrstufiges Planetenrad 27 drehbar angeordnet sind. Das erste mehrstufige Planetenrad 23 gehört zu einem ersten Planetenradsatz 20 mit einem ersten Hohlrad 11 und mit Sonnenrädern 34,35 und 36. Das zweite mehrstufige Planetenrad 27 gehört zu einem zweiten Planetenradsatz 21 mit einem zweiten Hohlrad 12 und mit Sonnenrädern 38 und 39.

Im Falle des gezeigten Ausführungsbeispieles gemäß Fig. 1 ist der erste mehrstufige Planetenradsatz 20 dreistufig und das erste mehrstufige Planetenrad 23 umfaßt die Stufen 24,25 und 26. Beim zweiten mehrstufigen Planetenradsatz 21 weist das zweite mehrstufige Planetenrad 27 analog mindestens zwei Stufen 28 und 29 auf. Die um die Habenachse 1 herum angeordneten Sonnenräder 34,35,36,38 und 39 sind über in einer Drehrichtung wirkende Freiläufe 44,45,46,48 und 49 mit der Nabenachse 1 verbindbar und lassen sich durch geeignete Steuereinrichtungen 32 und 33 von außerhalb des Nabenschaltgetriebes entlang der Nabenachse 1 aussteuern, wobei sich verschiedene Übersetzungsverhältnisse innerhalb des Nabenschaltgetriebes erzielen lassen.

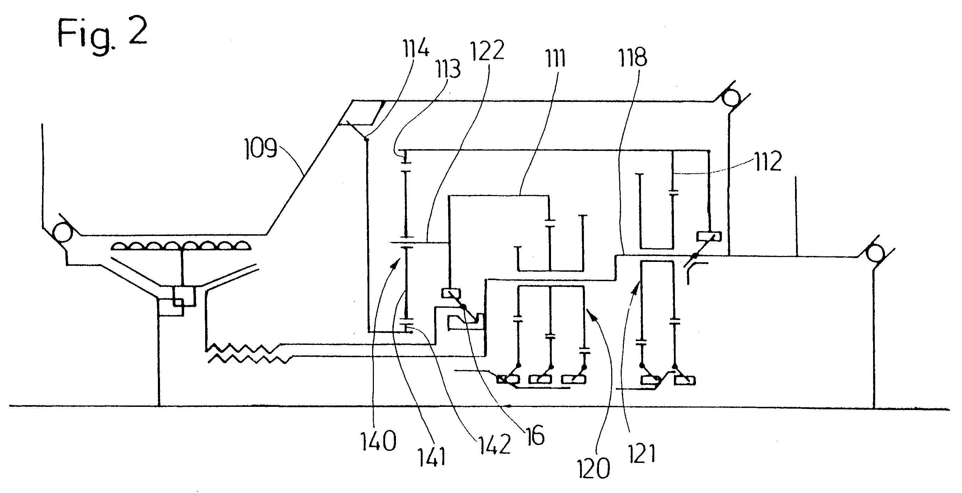

Die Fig. 2 stellt eine Variante zu dem Nabenschaltgetriebe gemäß Fig. 1 dar. Teile und/oder Elemente dieses Nabenschaltgetriebes, die von denen des Nabenschaltgetriebes gemaß Fig. 1 verschieden sind, werden mit Positionsziffern vermehrt um Hundert versehen, sofern sie einen Vergleich in Funktion oder Aussehen zulassen.

Die Anordnung der Nabenachse 1, des Hebelkonus 2 mit dem Hebel 3, des Festkonus 6, des ersten mehrstufigen Planetenradsatzes 23, des zweiten mehrstufigen Planetenradsatzes 27 sowie der Sonnenräder 34,35,36,38 und 39 mit ihren Freiläufen 44,45,46,48 und 49 auf der Nabenachse 1 entsprechen der zuvor beschriebenen Anordnung gemaß Fig. 1. Auch ist der Antreiber 7 über das erste Lager gegen den Festkonus 6 und über das zweite Lager gegen eine modifizierte Nabenhülse 109 abgestützt, die sich wiederum über das dritte Lager auf dem Hebelkonus 2 abwälzt. Der Antreiber 7 ist drehfest mit einem ersten Planetenradträger 118 verbunden, auf dem das erste mehrstufige Planetenrad 23 und das zweite mehrstufige Planetenrad 27 drehbar angeordnet sind. Das erste mehrstufige Planetenrad 23 gehört zu einem ersten Planetenradsatz 120 mit einem ersten Hohlrad 111 und den Sonnenrädern 34,35 und 36. Das zweite mehrstufige Planetenrad 27 gehört zu einem zweiten Planetenradsatz 121 mit einem zweiten Hohlrad 112 und mit Sonnenrädern 38 und 39. Im Falle des gezeigten Ausführungsbeispiels gemäß Fig. 2 ist der erste mehrstufige Planetenradsatz 120 dreistufig und das erste mehrstufige Planetenrad 23 umfaßt die Stufen 24,25 und 26. Beim zweiten mehrstufigen Planetenradsatz 121 weist das zweite mehrstufige Planetenrad 27 analog mindestes zwei Stufen 28 und 29 auf.

Wie aus Fig. 1 hervorgeht, sind die Freiläufe 44,45 und 46 der Sonnenräder 34,35 und 36 in der entgegengesetzten Drehrichtung zu den Freiläufen 48 und 49 der Sonnenräder 38 und 39 angeordnet und zwar lassen sich die Sonnenräder 34,35 und 36 auf der Nabenachse 1 nach rückwärts und die Sonnenräder 38 und 39 nach vorwärts leer durchdrehen.

Wieder bezogen auf die Figuren 1 und 2 ist auf dem ersten Planetenradträger 18,118 axial gesehen auf beiden Seiten der Planetenradsätze 20,120 und 21,121 je eine in einer Drehrichtung wirkende Kupplungseinrichtung 16 und 17 angeordnet, wobei die Kupplungseinrichtung 16 in Antriebsdrehrichtung und die Kupplungseinrichtung 17 in Rückwärtsdrehrichtung mitnimmt. Die antriebsseitige Kupplungseinrichtung 17 wirkt mit dem zweiten Hohlrad 12,112 zusammen und die hebelkonusseitige Kupplungseinrichtung 16 wirkt mit einem zweiten Planetenradträger 22,122 zusammen, wobei diese entsprechend der Variante gemäß Fig. 1 über eine Klauenkupplung 30 mit dem ersten Hohlrad 11 in drehfester Verbindung steht. Bei der Variante gemäß Fig. 2 wirkt der erste Planetenradträger 118 über die Kupplungseinrichtung 16 direkt mit dem ersten Hohlrad 111 zusammen, das wiederum mit einem zweiten Planetenradträger 122 verbunden ist. Bezogen auf die Fig. 1 und 2 ist der zweite Planetenradträger 22,122 Bestandteil eines Differential-Planetenradsatzes 40,140, der sich aus einem zumindest einstufigen Differential-Planetenrad 41,141, einem Differential-Hohlrad 13,113 und einem Differential-Sonnenrad 42,142 zusammensetzt. Gemäß Fig. 1 wirkt das Differential-Hohlrad 13 über eine in Antriebsdrehrichtung greifende und in Rückwärtsdrehrichtung leerlaufende Kupplungseinrichtung 14 mit der Nabenhülse 9 zusammen.Bei der Variante gemäß Fig. 2 steht das Differential-Sonnenrad 142 über eine in Antriebsdrehrichtung greifende und in Rückwärtsdrehrichtung leerlaufende Kupplungseinrichtung 114 mit der Nabenhülse 109 in Wirkverbindung.

Der erste Planetenradträger 18,118 trägt an seinem hebelkonusseitigen Ende eine Gewinde 10, auf welches ein Bremskonus 5 beweglich aufgeschraubt ist. Das Gewinde 10 ist als Rechtsgewinde mit steilverlaufenden Gewindegängen ausgeführt, so daß der durch eine hier nicht gezeigte Friktion in der Drehwilligkeit eingeschränkte Bremskonus 5 bei Drehung des ersten Planetenradträgers 18 in Antriebsdrehrichtung sich zur Antriebsseite hin auf Block und beim Rückwärtsdrehen des ersten Planetenradträgers 18 in Richtung Hebelkonus zu einer Bremseinrichtung 19 hin bewegt. Zu dieser Bremseinrichtung 19 gehört ein Bremsmantel 4, der mehrteilig ausgeführt ist und sich zur Erzeugung von Reibungskräften nach außen gegen die Nabenhülse 9 spreizen läßt, wenn der Bremskonus 5 sich mit seinen Schrägen unter den Bremsmantel 4 schiebt. Dieser stützt sich am Hebelkonus 2 ab und überträgt diesem seine Drehkräfte über eine Klauenkupplung 37, wobei diese Drehkräfte über den Hebel 3 am Rahmen des Fahrrades abgestützt werden.

Die mit dem ersten Planetenradträger 18,118 in Verbindung stehende Kupplungseinrichtung 16 ist durch eine Aushebevorrichtung 31 aussteuerbar, wobei diese Aussteuerbarkeit automatisch beim Rückwärtstreten arbeitet. Die Kupplungseinrichtung 16 erzeugt im ersten Planetenradsatz 20,120 für den Fall, daß keines der Sonnenräder 34,35 und 36 auf der Nabenachse festgelegt wird, eine zusätzliche direkte Gangstufe ebenso wie die Kupplungseinrichtung 17 am zweiten Planetenradsatz 21.

Zur Schaltung der einzelnen Gangstufen stehen für die manuelle Steuerung von außerhalb durch den Fahrradfahrer die aushebbaren Freiläufe 44,45,46,48 und 49 sowie die aushebbare Kupplungseinrichtung 17 zur Verfügung. Beachtet man den ersten Planetenradsatz 20,120, dessen Aufgabe es ist, ein erstes Hohlrad 11,111 anzutreiben, so können die Freiläufe 44,45 und 46 durch eine erste Steuervorrichtung 32 nacheinander ausgehoben werden. Hebt man beispielsweise die Freiläufe 44 und 45 aus, so wirkt der erste Planetenradsatz 20,120 über den Freilauf 46 über das Sonnenrad 36, über die dritte Stufe 26 des ersten mehrstufigen Planetenrades 23 über die zweite Stufe 25 auf das erste Hohlrad 11,111. Zieht man die erste Steuervorrichtung 32 zurück, so kann der Freilauf 45 eingreifen und das Sonnenrad 35 gegen die Habenachse 1 abstützen. Durch die verschiedenen Drehzahlen der Sonnenräder 35 und 36 wird in diesem Falle der Drehzahl 0 am Sonnenrad 35 der Freilauf 46 überholt und der Kraftfluß läuft über den Freilauf 45, das Sonnenrad 35, die erste Stufe 25 des ersten mehrstufigen Planetenrades 20 zum ersten Hohlrad 11,111. Wird schließlich durch weiteres Vorausziehen der ersten Steuervorrichtung 32 dem Freilauf 44 die Möglichkeit des Abstützens an der Nabenhülsenachse 1 gegeben, so werden die beiden Freiläufe 45 und 46 überholt und das Sonnenrad 45 stützt sich an der Nabenachse 1 ab. Werden aber alle Freiläufe 44,45 und 46 ausgehoben, so ist es die Kupplungseinrichtung 16, die gegenüber dem ersten Hohlrad 11,111 in Antriebsrichtung wirksam wird, nachdem sie in den drei vorherbeschriebenen Gangstufen überholt worden war.

Wie aus dem vorbeschriebenen Ausführungen deutlich wird, können vier Gangstufen dadurch geschaltet werden, daß einmal alle drei Freiläufe 44,45 und 46 ausgehoben sind und dadurch ein direkter Antrieb über die Kupplungseinrichtung 16 erfolgt, dann die beiden Freiläufe 44 und 45, dann nur der Freilauf 44 und daß schließlich die Steuerung herausgenommen wird und dem Freilauf 44 die Gelegenheit der Abstützung an der Nabenachse 1 gegeben wird, wodurch die Freiläufe 45 und 46 sowie die Kupplungseinrichtung 16 überholt werden.

Betrachtet man den zweiten Planetenradsatz 21, so stehen hier zwei Freiläufe 48 und 49 und eine Kupplungseinrichtung 17 zu Gebote. Anstatt beide Freiläufe 48 und 49 durch eine zweite Steuervorrichtung 33 aussteuerbar zu machen, was man ohne weiteres könnte, hat man sich in den Varianten gemäß den Fig. 1 und 2 dafür entschieden, den Freilauf 49 und die Kupplungseinrichutng 17 aussteuerbar zu gestalten und den Freilauf 48 automatisch wirken zu lassen. Es ergeben sich damit drei Gangstufen, deren Aufgabe es ist, ein zweites Hohlrad 12,112 anzutreiben, das starr mit einem Differential-Sonnenrad 42 verbunden ist. Ein direkter Gang wird durch Aufheben der Aushebung an der Kupplungseinrichtung 17 erzielt, wobei die Freiläufe 48 und 49 überholt werden. Der nächstschnellere Gang ergibt sich durch Ausheben der Kupplungseinrichtung 17, wobei der Freilauf 48 mitnimmt, und der Freilauf 49 ausgehoben sein muß. Die schnellste Übersetzungsstufe wird erreicht, wenn man die Aushebung des Freilaufes 49 aufhebt und diesen zusätzlich mitnehmen läßt, wodurch der Freilauf 48 überholt wird. Die Kupplungseinrichtung 17 muß ausgehoben bleiben.

Wie bereits erwähnt, sperren die Freiläufe 44,45 und 46 sowie die Kupplungseinrichtungen 14,114 und 16 vom Antreiber 7 aus betrachtet vorwärts, die Freiläufe 48 und 49 sowie die Kupplungseinrichtung 17 nach rückwärts.

Zur Erreichung der 4 mal 3, also insgesamt 12 Gangstufen, an der Nabenhülse 9,109 kommt es zur Zusammenführung des Kraftflusses aus den beiden Planetenradsätzen 20,120 und 21,121 in dem Differential-Planetenradsatz 40,140.

Gemäß Fig. 1 wirkt als erster Getriebeausgang aus dem ersten Planetenradsatz das erste Hohlrad 11 auf den zweiten Planetenradträger 22, wobei die Kupplungseinrichtung 16 ebenfalls diesem Getriebeausgang zuzurechnen ist. Als zweiter Getriebeausgang ist das zweite Hohlrad 12 anzusehen, auf welches analog zum ersten Getriebeausgang auch die Kupplungseinrichtung 17 wirkt. Da, wie beschrieben, das zweite Hohlrad 12 mit dem Differential-Sonnenrad 42 starr verbunden ist, werden die beiden Getriebeausgänge im Differential-Planetenradsatz 40 vereinigt und über das Differential-Planetenrad 41 mit dem Differential-Hohlrad 13 über eine in Antriebsdrehrichtung sperrende Kupplungseinrichtung 14 der Nabenhülse 9 gekoppelt.

Bei der zweiten Variante des Nabenschaltgetriebes gemäß Fig. 2 wirkt als erster Getriebeausgang aus dem ersten Planetenradsatz 120 das erste Hohlrad 111 auf den zweiten Planetenradträger 122, wobei die Kupplungseinrichtung 16, deren Antriebsteil starr mit dem ersten Planetenradträger 118 verbunden ist, ebenfalls diesem Getriebeausgang zuzurechnen ist, da sie auf den zweiten Planetenradträger 122 wirkt.

Als zweiter Getriebeausgang ist das zweite Hohlrad 112 anzusehen, auf welches analog zum ersten Getriebeausgang auch die Kupplungseinrichtung 17 wirkt. Das zweite Hohlrad 112 wirkt mit dem Differential-Hohlrad 113 zusammen und das erste Hohlrad 111 wirkt mit dem zweiten Planetenradträger 122 zusammen, wodurch sich die beiden Getriebeausgänge im Differential-Planetenradsatz 140 über das Differential-Planetenrad 141 vereinigen und der Kraftfluß an das Differential-Sonnenrad 142 weitergegeben wird, welches über eine in Antriebsdrehrichtung sperrende Kupplungseinrichtung 114 mit der Nabenhülse 109 gekoppelt ist.

Zur Beschreibung der Funktion und der Schaltbarkeit des vorliegenden Nabenschaltgetriebes wird wegen der Vielzahl der Gänge ein Schaltschema aufgestellt, das für beide Varianten des erfindungsgemäßen Nabenschaltgetriebes gültig ist. Es wird dort mit A die äußere Steuereinwirkung auf das Nabenschaltgetriebe bezeichnet, d. h. der betreffende Freilauf oder Kupplungseinrichtung wird ausgehoben. Die sich daraus ergebende Folge wird mit s und ü beschrieben, d. h. s bedeutet, daß die Kupplungseinrichtung bzw. der Freilauf sperrt und ü bedeutet, daß die Kupplungseinrichtung bzw. der Freilauf überholt wird. Die Großbuchstaben bedeuten sozusagen die Ursache und die Kleinbuchstaben die Wirkung.

### SCHALTSCHEMA

| Gangstufe | Kuppl. einricht. 16 | erster Planetenradsatz 20,120 | | | Kuppl. einricht. 17 | zweiter Planetenradsatz 21,121 | |
|---|---|---|---|---|---|---|---|
| | | Freilauf 44 | Freilauf 45 | Freilauf 46 | | Freilauf 49 | Freilauf 48 |
| | | | | | | | |
| 1 | s | A | A | A | A | s | ü |
| 2 | s | A | A | A | A | A | s |
| 3 | s | A | A | A | s | ü | ü |
| 4 | ü | s | ü | ü | A | s | ü |
| 5 | ü | s | ü | ü | A | A | s |
| 6 | ü | s | ü | ü | s | ü | ü |
| 7 | ü | A | s | ü | A | s | ü |
| 8 | ü | A | s | ü | A | A | s |
| 9 | ü | A | s | ü | s | ü | ü |
| 10 | ü | A | A | s | A | s | ü |
| 11 | ü | A | A | s | A | A | s |
| 12 | ü | A | A | s | s | ü | ü |

Die erste Gangstufe wird beispielsweise durch Ausheben der Freiläufe 44,45 und 46 sowie der Kupplungseinrichtung 17 erreicht, wodurch der erste Planetenradträger 18,118 durch die Kupplungseinrichtung 16 direkt unter Umgehung des ersten Planetenradsatzes 20,120 mit dem ersten Hohlrad 11,111 verbunden ist, während der Freilauf 49 sperrt und das Sonnenrad 38 für den zweiten Planetenradsatz 21,121 aktiviert. Der Freilauf 48 läuft leer schneller nach vorwärts durch. Der zweite Planetenradträger 22 läuft gemäß Fig. 1 mit Antriebsdrehzahl um, während das Differential-Sonnenrad 42 mit der höchsten Übersetzung ins Schnelle umläuft. Dies führt innerhalb des Differential-Planetenradsatzes 40 zum relativen Zurückbleiben der Drehzahl des Differential-Hohlrades 13, wodurch die Nabenhülse 9, angetrieben über die Kupplungseinrichtung 14, mit ihrem langsamsten Drehzahl umläuft, wodurch eine Berggangstufe mit der höchsten Übersetzung erreicht wird.

Die zweite Gangstufe wechselt die Kraftübertragung vom Freilauf 49 auf den automatisch wirkenden Freilauf 48 durch Ausheben des Freilaufs 49. Die Übersetzung im zweiten Planetenradsatz 21 wird geringer, das zweite Hohlrad 12 und das Differential-Sonnenrad 42 laufen langsamer um, wodurch das Differential-Hohlrad 13 und somit die Nabenhülse 9 bei gleichbleibender Drehzahl des zweiten Planetenradträgers 21 entsprechend schneller umläuft.

Die dritte Gangstufe wird durch Aufheben der Aushebung an der Kupplungseinrichtung 17 erreicht, wodurch das zweite Hohlrad 12 direkt mit der gegenüber den beiden vorherbeschriebenen Drehzahlen langsameren Antriebsdrehzahl angetrieben wird. Da die Kupplungseinrichtung 16 ebenfalls sperrt und den zweiten Planetenradträger 22 auf Antriebsdrehzahl bringt, laufen also das Differential-Sonnenrad 42 und das Differential-Hohlrad 13 ebenfalls mit Antriebsdrehzahl um. Die Differential-Planetenräder 41 drehen sich relativ zum Differential-Sonnenrad 42 und zum Differential-Hohlrad 13 nicht. Die Nabenhülse 9 wird somit mit Antriebsdrehzahl mitgenommen, was einem Direktgang entspricht.

Die vierte Gangstufe wird dadurch hergestellt, daß gegenüber der dritten in dem zweiten Planetenradsatz 21 die Aushebung des schaltbaren Freilaufs 49 aufgehoben wird, falls der von der zweiten Gangstufe her noch wirksam gewesen sein sollte. Ebenso wird die Aushebung im Freilauf 44 des ersten Planetenrads 20 aufgehoben, wodurch dieser sperrt und die Freiläufe 45 und 46 zum Überholen zwingt, ob sie nun ausgehoben sind oder nicht. Um den zweiten Planetenradsatz 21 die Möglichkeit zur Übersetzungsbildung zu geben, wird schließlich die Kupplungseinrichtung 17 ausgehoben. Zur Bildung der Drehzahl der Nabenhülse 9 dreht das Differential-Sonnenrad 41 wieder mit höchster Übersetzung und der zweite Planetenradträger 18 in der für den ersten Planetenradsatz 20 langsamsten Drehzahl, jedoch schneller als im direkten Gang, wenn die Kupplungseinrichtung 16 sperrt.

Das Prinzip der Gangstufenbildung ist mit der Beschreibung der ersten vier Gangstufen ausreichend genau beschrieben und es genügt, nur noch die zwölfte Gangstufe zu erwähnen, die dadurch entsteht, daß zur Erreichung der höchsten Schnellgangübersetzung das Differential-Sonnenrad 42 möglichst langsam und der zweite Planetenradträger 18 möglichst schnell dreht. Erreicht wird die langsamste Gangstellung für das Differential-Sonnenrad 42 durch die Aufhebung der Aushebung für die Kupplungseinrichtung 17, wodurch das Differential-Sonnenrad 42 in Antriebsdrehzahl umläuft. Die höchste Drehzahl des zweiten Planetenradträgers 18 durch den ersten Planetenradsatz 20 wird durch die Aufhebung der Aushebung des Freilaufes 46 erreicht. Die Freiläufe 44 und 45 müssen für die Sperrung des Freilaufes 46 ausgehoben sein. Die Kupplungseinrichtung 16 wird dabei überholt. Das Differential-Hohlrad 13 und somit die Nabenhülse 9 erreichen ihr höchstes Übersetzungsverhältnis gegenüber dem mit Antriebsdrehzahl umlaufenden ersten Planetenradträger 18 mit seinem Antreiber 7.

Für das Nabenschaltgetriebe gemäß Fig. 2 gilt für die Gangstufenbildung das für das Nabenschaltgetriebe gemäß Fig. 1 Gesagte im Hinblick auf die Schaltfolge nach dem Schaltschema. Die Wirkung auf die Nabenhülse 109 über die Kupplungseinrichtung 114 ist jedoch je nach Auslegung mehr oder weniger verschieden, wobei die Spreizung und die Gangsprünge unterschiedlich ausfallen können. Im wesentlichen liegt der Unterschied darin begründet, daß zwar noch der zweite Planetenradträger 122 vom ersten Planetenradsatz 120 angetrieben wird, daß aber der Krafteinleitung hier vom zweiten Planetenradsatz 21 auf das Differential-Sonnenrad 42 und dort die Krafteinleitung vom zweiten Planetenradsatz 121 auf das Differential-Hohlrad 113 gegenübersteht, was zur Folge hat, daß hier die Nabenhülse 9 vom Differential-Hohlrad 13 über die Kupplungseinrichtung 14 und dort die Nabenhülse 109 vom Differential-Sonnenrad 142 über die Kupplungseinrichtung 114 angetrieben wird.

Soll nun ein Berggang geschaltet werden, so muß der zweite Planetenradträger 122 möglichst langsam und das Differential-Hohlrad 113 möglichst schnell laufen. Wie der Vergleich mit dem Berggang der Variante gemäß Fig. 1 zeigt, kommt die schnelle Drehzahl aus dem zweiten Planetenradsatz 121 und die langsame Drehzahl aus dem ersten Planetenradsatz 120. Das Differential-Sonnenrad 142 läuft langsam um und teilt diese Drehzahl der Nabenhülse 109 mit. Analog schalten sich die einzelnen Gangstufen ohne Änderung gemäß dem Schaltschema, das für die Variante gemäß Fig. 1 gilt, wie beschrieben wurde.

Die Betätigung der Bremse erfolgt durch Rückwärtstreten und dadurch Rückwärtsdrehen des Antriebsritzels 8 auf dem Antreiber 7 des ersten Planetenradträgers 18,118 und schließlich des Gewindes 10, das drehfest mit dem ersten Planetenradträger 18,118 verbunden ist. Der durch eine hier nicht gezeigte Funktionseinrichtung in seiner Drehfähigkeit eingeschränkte Bremskonus schraubt sich in Richtung Bremsmantel 4 und spreizt diesen nach außen gegen die Nabenhülse 9,109, wodurch die Bremsung eingeleitet wird. Die Bremsmomente werden über die Klauenkupplung 37 auf den Fahrradrahmen über den Hebelkonus 2 und den Hebel 3 geleitet. Die Kupplungseinrichtung 16 ist mit einer Aushebevorrichtung 31 versehen, die den möglichen Kraftfluß in Antriebsdrehrichtung unterbricht, wenn der Bremskonus sich in axialer Richtung bewegt, um sicherzustellen, daß für das Lösen der Bremse ausreichend Leerlauf-Drehwinkel in Antriebsrichtung bleibt.

## Patentansprüche

1. Mehrgang-Antriebsnabe für Fahrräder umfassend:
* eine an einem Fahrradrahmen drehfest anbringbare Nabenachse (1);
* einen an der Nabenachse (1) drehfest angeordneten Festkonus (6);
* einen an der Nabenachse (1) angeordneten Hebelkonus (2), der über einen Hebel (3) mit dem Fahrradrahmen drehfest verbunden ist;
* einen an der Nabenachse (1) drehbar gelagerten Antreiber (7) mit einem Antriebsritzel (8);
* eine zur Nabenachse (1) konzentrisch auf dem Antreiber (7) und dem Hebelkonus (2) gelagerte und ein Nabenschaltgetriebe umgreifende Nabenhülse (9);
* eine Bremseinrichtung (19), umfassend einen Bremsmantel (4) und einen Bremskonus (5);
* ein Nabenschaltgetriebe, bestehend aus einem ersten Planetenradsatz (20) mit mindestens einer Stufe und einem zweiten Planetenradsatz (21) mit mindestens einer Stufe, als Teile dieses Nabenschaltgetriebes, umfassend
* einen ersten an der Nabenachse (1) drehbar gelagerten Planetenradträger (18);
* ein erstes am ersten Planetenradträger (18) drehbar gelagertes mehrstufiges Planetenrad (23);
* ein zweites am ersten Planetenradträger (18) drehbar gelagertes mehrstufiges Planetenrad (27);
* jeweils ein den einzelnen Stufen (24,25,26) des ersten mehrstufigen Planetenrades (23) zugeordnetes und mit diesen Stufen kämmendes Sonnenrad (34,35,36), welches auf der Nabenachse (1) drehbar gelagert ist und in einer jeweiligen axialen Zuschaltposition durch einen Freilauf (44,45,46) wahlweise mit der Nabenachse (1) drehfest verbindbar ist;
* jeweils ein den einzelnen Stufen (28,29) des zweiten mehrstufigen Planetenrades (27) zugeordnetes und mit diesen Stufen kämmendes Sonnenrad (38,39), welches auf der Nabenachse (1) drehbar gelagert ist und in einer jeweiligen axialen Zuschaltposition wahlweise mit der Nabenachse (1) drehfest verbindbar ist;
* ein innerhalb der Nabenhülse (9) konzentrisch um die Nabenachse (1) drehbar gelagertes erstes Hohlrad (11), welches mit einer der Stufen (24, 25 oder 26) des ersten mehrstufigen Planetenrades (23) kämmt;
* eine innerhalb der Nabenhülse (9) konzentrisch um die Nabenachse (1) drehbar gelagertes zweites Hohlrad (12), welches mit einer der Stufen (28 oder 29) des zweiten mehrstufigen Planetenrades (27) kämmt;
dadurch gekennzeichnet, daß ein Differential-Planetenradsatz (40) mit mindestens einer Stufe im Nabenschaltgetriebe innerhalb der Nabenhülse (9) angeordnet ist, dessen zweiter Planetenradträger (22) mit dem ersten Hohlrad (11), dessen Differential-Hohlrad (13) mit der Nabenhülse (9) und dessen Differential-Sonnenrad (42) mit dem zweiten Hohlrad (12) zusammenwirkt.

2. Antriebsnabe nach Anspruch 1, dadurch gekennzeichnet, daß das Differential-Hohlrad (13) über eine in einer Drehrichtung wirkende Kupplungseinrichtung (14) mit der Nabenhülse (9) in Wirkverbindung steht.

3. Antriebsnabe nach den Ansprüchen 1 und 2, dadurch gekennzeichnet, daß das zweite Hohlrad (12) mit dem Differential-Sonnenrad (42) des Differential-Planetenradsatzes (40) eine Baueinheit bildet.

4. Antriebsnabe nach den Ansprüchen 1 - 3, dadurch gekennzeichnet, daß der zweite Planetenradträger (22) beispielsweise über eine Klauenkupplung (30) dauernd mit dem zweiten Hohlrad (11) verbunden ist.

5. Antriebsnabe nach den Ansprüchen 1 - 4, dadurch gekennzeichnet, daß der zweite Planetenradträger (22) über eine in Drehrichtung einseitig wirkende Kupplungseinrichtung (16) mit dem ersten Planetenradträger (18) in Wirkverbindung steht.

6. Antriebsnabe nach Anspruch 5, dadurch gekennzeichnet, daß die Kupplungseinrichtung (16) beim Rückwärtstreten während der Zeit des Bremsbetriebes aussteuerbar ist.

7. Antriebsnabe nach den Ansprüchen 1 - 6, dadurch gekennzeichnet, daß der erste Planetenradträger (18) und der Antreiber (7) drehfest miteinander verbunden sind.

8. Antriebsnabe nach den Ansprüchen 1 - 7, dadurch gekennzeichnet, daß das zweite Hohlrad (12) über eine in einer Drehrichtung wirkende Kupplungseinrichtung (17) mit dem ersten Planetenradträger (18) verbunden sind.

9. Antriebsnabe nach Anspruch 8, dadurch gekennzeichnet, daß die Kupplungseinrichtung (17) aussteuerbar ist.

10. Mehrgang-Antriebsnabe für Fahrräder umfassend:
* eine an einem Fahrradrahmen drehfest anbringbare Nabenachse (1);
* einen an der Nabenachse (1) drehfest angeordneten Festkonus (6);
* einen an der Nabenachse (1) angeordneten Hebelkonus (2), der über einen Hebel (3) mit dem Fahrradrahmen drehfest verbunden ist;
* einen an der Nabenachse (1) drehbar gelagerten Antreiber (7) mit einem Antriebsritzel (8);
* eine zur Habenachse (1) konzentrisch auf dem Antreiber (7) und dem Hebelkonus (2) gelagerte und ein Nabenschaltgetriebe umgreifende Nabenhülse (109);
* eine Bremseinrichtung (19), umfassend einen Bremsmantel (4) und einen Bremskonus (5);
* ein Nabenschaltgetriebe, bestehend aus einem ersten Planetenradsatz (120) mit mindestens einer Stufe und einem zweiten Planetenradsatz (121) mit mindestens einer Stufe, als Teile dieses Nabenschaltgetriebes, umfassend
* einen ersten an der Nabenachse (1) drehbar gelagerten Planetenradträger (118);
* ein erstes am ersten Planetenradträger (118) drehbar gelagertes mehrstufiges Planetenrad (23);
* ein zweites am ersten Planetenradträger (118) drehbar gelagertes mehrstufiges Planetenrad (27);
* jeweils ein den einzelnen Stufen (24,25,26) des ersten mehrstufigen Planetenrades (23) zugeordnetes und mit diesen Stufen kämmendes Sonnenrad (34,35,36), welches auf der Nabenachse (1) drehbar gelagert ist und in einer jeweiligen axialen Zuschaltposition durch einen Freilauf (44,45,46) wahlweise mit der Nabenachse (1) drehfest verbindbar ist;
* jeweils ein den einzelnen Stufen (28,29) des zweiten mehrstufigen Planetenrades (27) zugeordnetes und mit diesen Stufen kämmendes Sonnenrad (38,39), welches auf der Nabenachse (1) drehbar gelagert ist und in einer jeweiligen axialen Zuschaltposition wahlweise mit der Nabenachse (1) drehfest verbindbar ist;
* ein innerhalb der Nabenhülse (109) konzentrisch um die Nabenachse (1) drehbar gelagertes erstes Hohlrad (111), welches mit einer der Stufen (24, 25 oder 26) des ersten mehrstufigen Planetenrades (23) kämmt;
* eine innerhalb der Nabenhülse (109) konzentrisch um die Nabenachse (1) drehbar gelagertes zweites Hohlrad (112), welches mit einer der Stufen (28 oder 29) des zweiten mehrstufigen Planetenrades (27) kämmt;
dadurch gekennzeichnet, daß ein Differential-Planetenradsatz (140) mit mindestens einer Stufe im Nabenschaltgetriebe innerhalb der Nabenhülse (109) angeordnet ist, dessen zweiter Planetenradträger (122) mit dem ersten Hohlrad (111), dessen Differential-Sonnenrad (142) mit der Nabenhülse (109) und dessen Differential-Hohlrad (113) mit dem zweiten Hohlrad (112) zusammenwirkt.

11. Antriebsnabe nach Anspruch 10, dadurch gekennzeichnet, daß das Differential-Sonnenrad (142) über eine in einer Drehrichtung wirkende Kupplungseinrichtung (114) mit der Nabenhülse (109) in Wirkverbindung steht.

12. Antriebsnabe nach den Ansprüchen 10 und 11, dadurch gekennzeichnet, daß das erste Hohlrad (111) mit dem zweiten Planetenradträger (122) des Differential-Planetenradsatzes (140) eine Baueinheit bildet.

13. Antriebsnabe nach den Ansprüchen 10 - 12, dadurch gekennzeichnet, daß der zweite Planetenradträger (122) über eine in Drehrichtung einseitig wirkende Kupplungseinrichtung (16) mit dem ersten Planetenradträger (118) in Wirkverbindung steht.

14. Antriebsnabe nach Anspruch 13, dadurch gekennzeichnet, daß die Kupplungseinrichtung (16) beim Rückwärtstreten während der Zeit des Bremsbetriebes aussteuerbar ist.

15. Antriebsnabe nach den Ansprüchen 10 - 14, dadurch gekennzeichnet, daß der erste Planetenradträger (118) und der Antreiber (7) drehfest miteinander verbunden sind.

16. Antriebsnabe nach den Ansprüchen 10 - 15, dadurch gekennzeichnet, daß das zweite Hohlrad (112) über eine in einer Drehrichtung wirkende Kupplungseinrichtung (17) mit dem ersten Planetenradträger (118) verbunden sind.

17. Antriebsnabe nach Anspruch 16, dadurch gekennzeichnet, daß die Kupplungseinrichtung (17) aussteuerbar ist.

## Claims

1. Multi-speed driving hub for cycles comprising:
* a hub spindle (1) for mounting rigidly on a cycle frame;
* a stationary cone (6) arranged on the spindle (1) in a non-rotatable manner;
* a bearing cone (2) arranged on the spindle (1) and connected non-rotatably to the cycle frame through a lever (3);
* a driver (7) rotatable mounted on the spindle (1) and having a drive pinion (8);
* a hub casing (9) concentric with the spindle (1), mounted on the driver (7) and the bearing cone (2) and enclosing a hub gear assembly;
* a brake device (19) comprising a brake shoe (4) and a brake cone (5);
* a hub gearbox comprising a first epicyclic train (20) with at least one stage and a second epicyclic train (21) with at least one stage, as parts of this hub gear assembly, comprising
* a planet wheel carrier (18) rotatably mounted on the spindle (1);
* a first multi-step planet wheel cluster (23) rotatably mounted on the first planet carrier (18);
* a second multi-step planet wheel cluster (27) rotatably mounted on the first planet carrier (18);
* a respective sunwheel (34, 35, 36) associated with the individual steps (24, 25, 26) of the first multi- step planet wheel carrier (23), meshing with these steps and rotatably mounted on the spindle (1) and being capable of non-rotatable connection to the spindle (1) at will in a respective axial gear position through a free wheel (44, 45, 46);
* a respective sunwheel (38, 39) associated with the individual steps (28, 29) of the second multi-step planet wheel cluster (27) and meshing with these steps and rotatably mounted on the spindle (1) and capable of being connected non-rotatably to the spindle (1) at will in a respective axial gear position;
* a first annulus (11) rotatably mounted within the hub casing (9) concentric with respect to the spindle (1) and meshing with one of the steps (24, 25 or 26) of the first multi-step planet wheel cluster (23);
* a second annulus (12) rotatably mounted within the hub casing (9) concentrically around the spindle (1) and meshing with one of the steps (28 or 29) of the second multi-step planet wheel cluster (27);
characterised in that a differential epicyclic train (40) is arranged with at least one stage in the hub gear assembly within the hub casing (9), its second planet carrier (22) co-operating with the first annulus (11), its differential annulus (13) co-operating with the hub casing (9) and its differential sunwheel (42) co-operating with the second annulus (12).

2. Driving hub according to Claim 1, characterised in that the differential annulus (13) is in an operative relationship with the hub sleeve or casing (9) through a clutch device (14) acting in one direction of rotation.

3. Driving hub according to Claim 1 and 2, characterised in that the second annulus (12) forms a structural unit with the differential sunwheel (42) of the differential epicyclic train (40).

4. Driving hub according to Claims 1-3, characterised in that the second planet carrier (22) is permanently connected to the second annulus (11) for example through a dog clutch (30).

5. Driving hub according to Claim 1-4, characterised in that the second planet carrier (22) is in an operational relationship with the first planet carrier (18) through a clutch device (16) which acts in one direction of rotation.

6. Driving hub according to Claim 5, characterised in that the clutch device (16) is controlled on reverse motion during the period of brake operation.

7. Driving hub according to Claims 1-6, characterised in that the first planet carrier (18) and the driver (7) are rigidly connected together for rotation.

8. Driving hub according to Claims 1-7, characterised in that the second annulus (12) is connected to the first planet carrier (18) through a clutch device (17) acting in one direction of rotation.

9. Driving hub according to Claim 8, characterised in that the clutch device (17) is controllable.

10. Multi-speed driving hub for cycles comprising:
* a hub spindle (1) for mounting non-rotatably on a cycle frame;
* a fixed cone (6) arranged non-rotatably on the spindle (1);
* a bearing cone (2) arranged on the spindle (1) and rigidly connected to the cycle frame through a lever (3);
* a driver mounted rotatably on the spindle (1) and having a drive pinion (8);
* a hub casing (109) concentric with the spindle, mounted on the driver (7) and the bearing cone (2) and enclosing a hub gear assembly;
* a brake device (19) comprising a brake shoe (4) and a brake cone (5);
* a hub gearbox comprising a first epicyclic train (120) with at least one stage and a second epicyclic train (121) with at least one stage, as components of this hub gearbox, comprising
* a first planet carrier (118) rotatably mounted on the spindle (1);
* a first multi-step planet wheel cluster (23) rotatably mounted on the first planet carrier (118);
* a second multi-step planet wheel cluster (27) rotatably mounted on the first planet carrier (118);
* a respective sunwheel (34, 35, 36) associated with the individual steps (24, 25, 26) of the first multi-step planet wheel cluster (23) and meshing with these steps and which is rotatably mounted on the spindle (1) and in a respective axial gear position is connected at will non-rotatably to the spindle (1) through a freewheel (44, 45, 46);
* a respective sunwheel (38, 39) associated with the individual steps (28, 29) of the second multi-step planet wheel cluster (27) and meshing with these steps and which is rotatably mounted on the spindle (1) and in a respective axial gear position is connected non rotatably at will to the spindle (1);
* a first annulus (111) mounted rotatably within the hub casing (109) and mounted to rotate about the spindle (1) and meshing with one of the steps (24, 25 or 26) of the first multi-step planet wheel cluster (23);
* a second annulus (112) within the hub casing (109) and rotatably mounted concentrically about the spindle (1) and which meshes with one of the steps (28 or 29) of the second multi-step planet wheel cluster (27);
* characterised in that a differential epicyclic train (140) with at least one stage is arranged in the hub gearbox within the hub casing (109) and of which the second planet carrier (122) co-operates with the first annulus (111), its differential sunwheel (142) co-operates with the hub sleeve or casing (109) and its differential annulus (113) co-operates with the second annulus (112).

11. Driving hub according to Claim 10, characterised in that the differential sunwheel (142) is in an operative relationship with the hub casing (109) through a clutch device (114) acting in one direction of rotation.

12. Driving hub according to Claims 10 and 11, characterised in that the first annulus (111) forms a structural unit with the second planet carrier (122) of the differential epicyclic train (140).

13. Driving hub according to Claims 10-12, characterised in that the second planet carrier (122) is in an operative relationship with the first planet carrier (118) through a clutch device (16) acting in one direction of rotation.

14. Driving hub according to Claim 13, characterised in that the clutch device (16) is controllable on reverse movement during the period of brake operation.

15. Driving hub according to Claims 10-14, characterised in that the first planet carrier (118) and the driver (7) are connected non-rotatably together.

16. Driving hub according to Claims 10-15, characterised in that the second annulus (112) are connected to the first planet carrier (118) through a clutch device (17) acting in one direction of rotation.

17. Driving hub according to Claim 16, characterised in that the clutch device (17) is controllable.

## Revendications

1. Moyeu d'entraînement à plusieurs vitesses, destiné à des bicyclettes, comprenant :
- un axe de moyeu (1) pouvant être fixé en rotation à un cadre de bicyclette,
- un cône fixe (6), bloqué en rotation, monté sur l'axe (1),
- un cône à levier (2), monté sur l'axe (1), et maintenu fixe en rotation par un levier (3) relié au cadre de bicyclette,
- un entraîneur (7) portant un pignon d'entraînement (8) et monté tournant sur l'axe de moyeu (1),
- une douille de moyeu (9) concentrique à l'axe (1), montée sur l'entraîneur (7) et sur le cône à levier (2) et enveloppant un mécanisme de changement de vitesse au moyeu,
- un dispositif de freinage (19), comprenant une garniture périphérique de freinage (4) et un cône de freinage (5),
- un mécanisme de changement de vitesse au moyeu, constitué d'un premier train planétaire (20) à au moins un étage de vitesse, d'un second train planétaire (21) à au moins un étage de vitesse, ces trains comportant les pièces suivantes faisant partie du mécanisme de changement de vitesse :
- un premier porte-satellite (18) monté tournant autour de l'axe (1),
- une première roue planétaire (23) à plusieurs étages, montée tournante sur le premier porte-satellite (18),
- une seconde roue planétaire (27) à plusieurs étages, montée tournante sur le porte-satellite (18),
- des roues solaires (34,.5, 36) associées respectivement avec engrènement à un des étages (24, 25, 26) de la première roue planétaire (23) à plusieurs étages, ces roues solaires étant montées tournantes autour de l'axe (1) et pouvant être, à volonté, reliées en rotation à cet axe (1), chacune dans sa position axiale d'enclenchement, par une roue libre (44, 45, 46),
- des roues solaires (38, 39) associées respectivement avec engrènement à un des étages (28, 29) de la seconde roue planétaire (27) à plusieurs étages, ces roues solaires étant montées tournantes autour de l'axe (1) et pouvant être à volonté reliées en rotation à cet axe (1), chacune dans sa position axiale d'enclenchement,
- à l'intérieur de la douille de moyeu (9) et concentriquement à l'axe (1), une première roue à denture intérieure (11), montée tournante et engrenant par l'intermédiaire d'un des étages (24, 25 et 26) avec la première roue planétaire (23) à plusieurs étages,
- à l'intérieur de la douille de moyeu (9) et concentriquement à l'axe (1), une seconde roue à denture intérieure (12) montée tournante et engrenant par l'intermédiaire d'un des étages (28 ou 29) avec la seconde roue planétaire (24) à plusieurs étages ;
moyeu caractérisé en ce que le mécanisme de changement de vitesse logé dans la douille de moyeu (9) comprend un train planétaire de différentiel (40) qui comporte au moins un étage et dont le second porte-satellite (22) coopère avec la première roue à denture intérieure (11) tandis que sa roue à denture intérieure de différentiel (13) coopère avec la douille (9) et dont sa roue solaire de différentiel (42) coopère avec la seconde roue à denture intérieure (12).

2. Moyeu d'entraînement selon la revendication 1, caractérisé en ce que la roue à denture intérieure de différentiel (13) est en liaison active avec la douille de moyeu (9) par l'intermédiaire d'un accouplement (14) actif dans un sens de rotation.

3. Moyeu d'entraînement selon les revendications 1 et 2, caractérisé en ce que la seconde roue à denture intérieure (12) forme une unité constructive avec la roue solaire de différentiel (42) appartenant au train planétaire de différentiel (40).

4. Moyeu d'entraînement selon les revendications 1 et 3, caractérisé en ce que le second porte-satellite (22) est relié en permanence à la seconde roue à denture intérieure (11), au moyen d'un accouplement à crabots (30).

5. Moyeu d'entraînement selon les revendications 1 et 4, caractérisé en ce que le second porte-satellite (22) est en liaison active avec le premier porte-satellite (18) par l'intermédiaire d'un accouplement (16) actif d'un seul côté dans le sens de rotation.

6. Moyeu d'entraînement selon la revendication 5, caractérisé en ce que l'accouplement (16) peut être commandé par rétropédalage pendant la durée du freinage.

7. Moyeu d'entraînement selon les revendications 1 et 6, caractérisé en ce que le premier porte-satellite (18) et l'entraîneur (7) sont solidaires en rotation.

8. Moyeu d'entraînement selon les revendications 1 et 7, caractérisé en ce que la seconde roue à denture intérieure (12) est reliée au premier porte-satellite (18) par l'intermédiaire d'un accouplement (17) actif dans un sens de rotation.

9. Moyeu d'entraînement selon la revendication 8, caractérisé en ce que l'accouplement (17) peut être commandé.

10. Moyeu d'entraînement pour bicyclette, comprenant :
- un axe de moyeu (1) pouvant être fixé en rotation à un cadre de bicyclette,
- un cône fixe (6), bloqué en rotation, monté sur l'axe (1),
- un cône à levier (2), monté sur l'axe (1), et maintenu fixe en rotation par un levier (3) relié au cadre de bicyclette,
- un entraîneur (7) portant un pignon d'entraînement (8) et monté tournant sur l'axe de moyeu (1),
- une douille de moyeu (109) concentrique à l'axe (1), montée sur l'entraîneur (7) et sur le cône à levier (2) et enveloppant un mécanisme de changement de vitesse au moyeu,
- un dispositif de freinage (19), comprenant une garniture périphérique de freinage (4) et un cône de freinage (5),
- un mécanisme de changement de vitesse au moyeu, constitué d'un premier train planétaire (120) à au moins un étage de vitesse, d'un second train planétaire (121) à au moins un étage de vitesse, ces trains comportant les pièces suivantes faisant partie du mécanisme de changement de vitesse :
- un premier porte-satellite (118) monté tournant autour de l'axe (1),
- une première roue planétaire (23) à plusieurs étages, montée tournante sur le premier porte-satellite (118),
- une seconde roue planétaire (27) à plusieurs étages, montée tournante sur le porte-satellite (118),
- des roues solaires (34, 5, 36) associées respectivement avec engrènement à un des étages (24, 25, 26) de la première roue planétaire (23) à plusieurs étages, ces roues solaires étant montées tournantes autour de l'axe (1) du moyeu et pouvant être, à volonté, reliées en rotation à cet axe (1), chacune dans sa position axiale d'enclenchement, par une roue libre (44, 45, 46),
- des roues solaires (38, 39) associées respectivement avec engrènement à un des étages (28, 29) de la seconde roue planétaire (27) à plusieurs étages, ces roues solaires étant montées tournantes autour de l'axe (1) du moyeu et pouvant être à volonté reliées en rotation à cet axe (1), chacune dans sa position axiale d'enclenchement,
- à l'intérieur de la douille de moyeu (109) et concentriquement à l'axe (1), une première roue à denture intérieure (111), montée tournante et engrenant par l'intermédiaire d'un des étages (24, 25 et 26) avec la première roue planétaire (23) à plusieurs étages,
- à l'intérieur de la douille de moyeu (109) et concentriquement à l'axe (1), une seconde roue à denture intérieure (112) montée tournante et engrenant par l'intermédiaire d'un des étages (28 ou 29) avec la seconde roue planétaire (27) à plusieurs étages.
moyeu caractérisé en ce que le mécanisme de changement de vitesse logé dans la douille de moyeu (109) comprend un train planétaire de différentiel (140) qui comporte au moins un étage et dont le second porte-satellite (122) coopère avec la première roue à denture intérieure (111) tandis que sa roue à denture intérieure de différentiel (142) coopère avec la douille (109) et sa roue solaire de différentiel (113) avec la seconde roue à denture intérieure (112).

11. Moyeu d'entraînement selon la revendication 10, caractérisé en ce que la roue solaire de différentiel (142) est en liaison active avec la douille de moyeu (109) par l'intermédiaire d'un accouplement actif (114) dans un sens de rotation.

12. Moyeu d'entraînement selon les revendications 10 à 11, caractérisé en ce que la première roue à denture intérieure (111) forme une unité constructive avec le second porte-satellite (122) du train planétaire de différentiel (140).

13. Moyeu d'entraînement selon les revendications 10 à 12, caractérisé en ce que le second porte-satellite (122) est en liaison active avec le premier porte-satellite (118) par l'intermédiaire d'un accouplement (16) actif d'un seul côté dans le sens de rotation.

14. Moyeu d'entraînement selon la revendication 13, caractérisé en ce que l'accouplement (16) peut être commandé par rétropédalage pendant la durée du freinage.

15. Moyeu d'entraînement selon les revendications 10 à 14, caractérisé en ce que le premier porte-satellite (118) et l'entraîneur (7) sont solidaires en rotation.

16. Moyeu d'entraînement selon les revendications 10 à 15, caractérisé en ce que la seconde roue à denture intérieure (112) est reliée au premier porte-satellite (118) par l'intermédiaire d'un accouplement (17) actif dans un sens de rotation.

17. Moyeu d'entraînement selon la revendication 16, caractérisé en ce que l'accouplement (117) peut être commandé.
